## Europäisches Patentamt

## European Patent Office

## Office européen des brevets

(11) Publication number: **0 079 710**
**A2**

# (12) EUROPEAN PATENT APPLICATION

(21) Application number: **82305752.6**

(22) Date of filing: **28.10.82**

(51) Int. Cl.³: **B 01 D 27/08**

(30) Priority: **16.11.81 US 321435**

(43) Date of publication of application:
**25.05.83 Bulletin 83/21**

(84) Designated Contracting States:
**BE CH DE FR GB IT LI LU NL SE**

(71) Applicant: **SYBRON CORPORATION**
**1100 Midtown Tower**
**Rochester, NY 14604(US)**

(72) Inventor: **Mehra, Ravinder C.**
**One Crow Hill Drive**
**Fairport New York(US)**

(72) Inventor: **Aggarwal, Raj K.**
**13 Hickory Pond Drive**
**Penfield New York(US)**

(74) Representative: **Oliver, Roy Edward et al,**
**POLLAK,MERCER & TENCH High Holborn House 52-54**
**High Holborn**
**London WC1V 6RY(GB)**

(54) **Pressure containment vessel for filter unit and combination thereof.**

(57) A pressure containment vessel (10), for receiving a filter unit (30), comprising an open top, hollow cylindrical body whose cylindrical side wall (12) upstands from the periphery of a closed bottom (14) which has a well (16), preferably cylindrical, extending below the plane of the bottom (14), arranged to accommodate the base (36) of a filter unit (30) and being located off-centre with respect to the centre of the bottom (14), and a screw closure (24) for the open top, which closure (24) has a first, central opening (26) and a second opening (28) spaced radially therefrom. The cylindrical side wall (12) of the vessel (10) can have a lower portion (18) extending below the plane of the closed bottom (14) and below the plane of the well bottom, with the lowermost edge of the lower cylindrical side wall portion (18) defining a support edge for the vessel (10). In another embodiment, a plurality of ribs (22) extend outwardly from the well (16) to the lower cylindrical side wall portion (18).

FIG. 1

-1-

PRESSURE CONTAINMENT VESSEL FOR FILTER UNIT AND
COMBINATION THEREOF.

DESCRIPTION

The present invention relates to a containment
vessel for filter units, particularly pressure filter
units, and a combination thereof.

Vacuum filter units are well known in the
art and are especially useful in laboratory and
analytical work. A typical vacuum filter unit is
described in U.S. Patent Number 3,295,686 and includes
an upper reservoir for the liquid to be filtered, a
lower receptacle for receiving the filtrate and
intermediate filter means. These three components
are joined to form an integral unit having a fluid
tight seal between the outer margins of the filter
means, reservoir and receptacle. In addition, the
receptacle has a spout for attachment to a vacuum
pump or other evacuation means. With this
arrangement, the receptacle can be partly evacuated
in order to facilitate the filtering process. When
the evacuation means is disconnected, the spout serves
the additional function of allowing the filtrate to
be poured from the receptacle.

For some applications, pressure filtration is desired as opposed to vacuum filtration. For example, viscous liquids or liquids with a high particle load, which may be difficult to filter using vacuum techniques, are often filtered under pressure. Pressure filtration is also used to filter liquids containing dissolved gases such as carbon dioxide. Pressure filtration also eliminates foaming problems often encountered with vacuum filtration.

To adapt the vacuum filter unit for use as a pressure filter unit, a cap, having a pressure line connector, is provided for the reservoir. In this way, the volume of the reservoir over the liquid can be pressurized to force the liquid down through the filter means and into the receptacle.

Whenever a vacuum filter unit is used for pressure filtration, there are several safety procedures which should be observed. For example, the filter unit should be contained behind an appropriate shield. This protects the user against explosion and personal or property injury resulting from particles of the filter unit or from the liquids being filtered in the event that the liquid contains corrosive materials or biological agents. Since the liquid being filtered under pressure is often viscous and relatively dense, it tends to make the filter unit top heavy when the liquid to be filtered is placed in the reservoir. For this reason, it is preferred that the filter unit be restrained or fixed in position so as to prevent its tipping and spillage of its contents.

Each vacuum filter unit is usually pre-sterilized, with a cotton plug inserted in the receptacle spout. This cotton plug prevents air borne bacteria or other organisms from entering in the receptacle and contaminating the filtrate. The plug is maintained in the spout during vacuum filtration and is removed only under sterile conditions, prior to pouring the filtrate from the receptacle. During pressure filtration, it is possible for the pressure within the receptacle to push the plug out of the spout. Accordingly, care must be taken to insure that the cotton plug remains in position during pressure filtration.

The present invention allows a vacuum filter unit to be used as a pressure filter with relative safety and convenience by providing complete containment and support for the filter unit throughout the pressure filtration process.

One aspect of the present invention provides a pressure containment vessel, for receiving a filter unit, comprising an open top, hollow cylindrical body whose cylindrical side wall upstands from the periphery of a closed bottom which has a well extending below the plane of the bottom, arranged to accommodate the base of a filter unit and being located off-centre with respect to the centre of the bottom, and a screw closure for the open top, which closure has a first, central opening and a second opening spaced radially from the central opening.

Another aspect of the invention provides, in combination, a filter unit and containment vessel for use in pressure filtration, the filter unit comprising:

    a) an upper, open-ended reservoir for receiving liquid to be filtered;

    b) a cap, for the open upper end of the reservoir, having an upstanding, centrally-located pressure connector;

    c) a lower receptacle, for receiving filtrate, having at least one outwardly extending spout and a removable plug therein;

d) filter means intermediate the reservoir and receptacle; and

e) means for providing a fluid tight seal between the peripheries of the reservoir, filter means and receptacle,

and the containment vessel being arranged to receive therein the filter unit and including a closed bottom, a cylindrical side wall and an open top, the bottom having a well therein which extends below the plane of the bottom for accommodating the base of the receptacle of the filter unit with the distance from the plane of the bottom of the well to the open top of the vessel being less than the height of the filter unit, and a closure for the open top, which has a central opening to permit the passage of the pressure connector of the filter unit from the containment vessel.

A preferred embodiment of the invention will now be described by way of example and with reference to the accompanying drawing in which:

Figure 1 is a side elevational view, partly broken away and in section, showing a containment vessel containing a filter unit; and

Figure 2 is a view taken along line 2-2 of Figure 1.

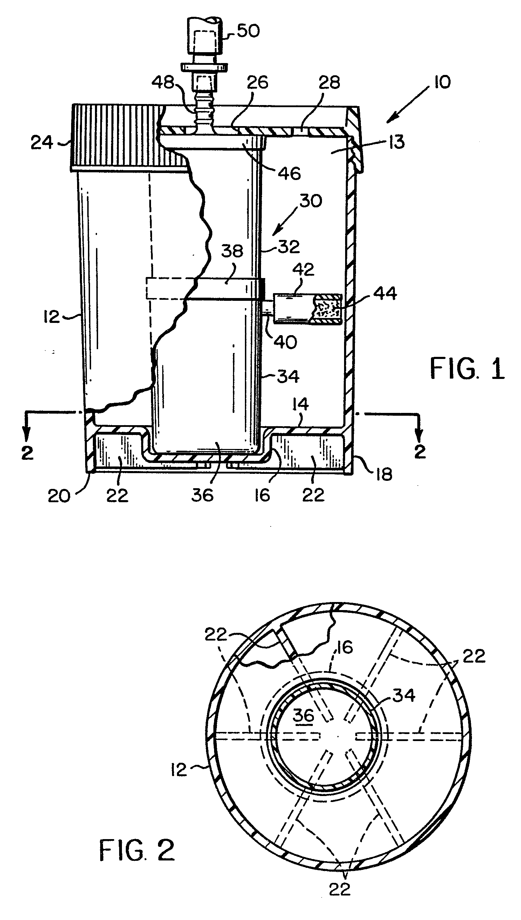

Referring to the drawing, Figure 1 shows a combination of a filter unit and a containment vessel in accordance with the present invention, which is indicated generally at 10. The vessel may be made from any suitable material such as clear, injection moulded polycarbonate. The vessel 10 is generally cylindrical with a cylindrical side wall 12, an open top 13 and a closed bottom 14, the latter being formed with a cylindrical well 16 located off-centre with respect to the centre of the bottom 14, for purposes set out hereinbelow.

The wall 12 has a lower portion 18 which extends downwardly from the plane of the bottom 14 to a plane below that of the bottom of the well 16. With this arrangement, the lower edge 20 of this lower wall portion 18 constitutes the supporting edge for the containment vessel.

Extending between the outer periphery of the well 16 and the inner periphery of the lower wall portion 18 is a plurality of radially extending ribs 22. These ribs 22 provide support for, and strengthen, the bottom 14 of the containment vessel.

The open top 13 of the containment vessel 10 is provided with a screw closure 24 which has a centrally-located opening 26 and at least one radially spaced vent opening 28 smaller in diameter than the central opening 26.

Disposed within the vessel 10 is a filter unit indicated generally at 30. This unit 30 may be any one of several types but is preferred to be generally similar in construction to the filter unit described in U.S. Patent Number 3,295,686. Generally, such a unit 30 includes an upper, open-ended reservoir 32, for receiving liquid to be filtered, and a lower receptacle 34 for receiving filtrate. The base 36 of the receptacle 34 has a diameter sufficient to permit its reception into the well 16, as shown in Figure 1.

Intermediate the reservoir 32 and receptacle 34 is a filter means 38 whose outer periphery is in fluid tight engagement with the reservoir and receptacle, so that liquid can pass only through the filter means in order to enter the receptacle 34.

Extending outwardly from the receptacle 34 and below the filter means 38 is a spout 40. As is customary, this spout 40 carries a connector 42 which is stuffed with a removable cotton plug 44.

The open upper end of the reservoir 32 is closed by a snap-on cap 46 having an upstanding connector 48 for attachment to a pressure line 50.

It is preferred that the height of the containment vessel 10, as measured from the bottom of the well 16 to the plane of the open top 13, is slightly less than the height of the filter unit 30. With this arrangement, the screw closure 24 will act to firmly seat the cap 46 upon the filter unit 30 and retain the filter unit within the containment vessel. The screw closure 24 also provides a safety feature as set out hereinbelow.

In operation, liquid to be filtered is first placed in the reservoir 32. The cap 46 is then positioned over the open end of the reservoir 32 and the entire filter unit 30 inserted into the containment vessel 10. It should be appreciated that the liquid within the reservoir 32 renders the filter unit slightly top heavy. Accordingly, locating the base 36 of the receptacle 34 in the well 16 acts to stabilise and support the filter unit so that it does not tip over.

Since the well 16 is off-centre with respect to the centre of the bottom 14 of the vessel 10, it should be appreciated that the spacing between the wall 12 of the vessel and the wall of the filter unit 30 varies from a minimum at one side of the well 16 to a maximum at the opposite side thereof. This is best seen in Figure 2. When the filter unit 30 is first inserted in the vessel 10, it is oriented so that the outlet of the spout 40 is positioned the greatest distance from the wall 12. This facilitates insertion and removal of the filter unit 30 from the containment vessel 10.

After the filter unit 30 has been positioned in the well 16, it is then rotated until the outlet of the spout 40 abuts or confronts the wall 12 of the containment vessel 10, as shown in Figure 1. With this arrangement, the wall 12 of the containment vessel 10 acts as stop means to prevent the cotton plug 44 from being pushed out of the connector 42 when the interior of the filter unit 30 is pressurized. Since the spacing between the wall 12 of the containment vessel 10 and the wall of the filter unit is variable, the arrangement as described herein will accommodate filter units of different diameters or having spouts 40 of different lengths.

After the filter unit 30 has been properly oriented with the outlet of the spout 40 abutting or confronting the wall 12, the screw closure 24 is located in position and threaded to the wall 12 to close the containment vessel 10. As the closure 24 is threaded into position, it bears against the cap 46 and forces the cap into a fluid tight engagement with the reservoir 32. A pressure line 50 is then connected to the pressure connector 48 and the filter unit 30 is pressurized.

Since the pressure line 50 cannot be connected to the connector 48 until after that closure 24 is in position, the closure acts as a safety feature in that the filter unit cannot be pressurized without the closure being in place. In this respect, the closure 24, which bears against cap 46, holds the cap in position and prevents the cap from being lifted from the reservoir 32 upon pressurization of the reservoir. Accordingly, if an attempt is made to pressurize the reservoir 32 without the closure in position, the cap 46 will separate from the reservoir, to prevent such pressurization.

Should any failure of the filter unit 30 occur while it is being pressurized, the vessel 10 will act to contain any liquids that might be expressed or leaked from the failed unit. The vent 28 in the closure 24 is sufficient to relieve pressure within the containment vessel 10, so that it does not fail should the filter unit 30 fail. Thus, it should be appreciated that the containment vessel 10 of the present invention provides a simple, easily operated means for safely converting, say, a vacuum filter unit to use as a pressure filter. The containment vessel 10 supports the filter unit 30 to prevent tipping when it is top heavy, provides a simple means for insuring that the cotton plug remains within the spout of the filter unit and incorporates a safety feature insuring that the containment vessel is completely closed and sealed before the filter unit can be pressurized.

CLAIMS

1. A pressure containment vessel, for receiving a filter unit, comprising an open top, hollow cylindrical body whose cylindrical side wall upstands from the periphery of a closed bottom which has a well extending below the plane of the bottom, arranged to accommodate the base of a filter unit and being located off-centre with respect to the centre of the bottom, and a screw closure for the open top, which closure has a first, central opening and a second opening spaced radially from the central opening.

2. A vessel as claimed in claim 1, wherein the well is cylindrical.

3. A vessel as claimed in claim 1 or 2, wherein the cylindrical side wall has a lower portion extending below the plane of the closed bottom and below the plane of the well bottom, the lowermost edge of the lower cylindrical side wall portion defining a support edge for the vessel.

4. A vessel as claimed in claim 3, wherein a plurality of ribs extend outwardly from the well to the lower cylindrical side wall portion.

5. A vessel as claimed in claim 3 or 4, wherein the depth of the well is less than the height of the lower cylindrical side wall portion.

6. A vessel as claimed in any preceding claim, wherein the distance from the plane of the bottom of the well to the plane of the open top is less than to the height of any filter unit received in the vessel.

7. A vessel as claimed in any preceding claim including a filter unit having a cup-shaped receptacle with a laterally extending spout and a plug removably mounted in the outlet of the spout, wherein the well is located off-centre with respect to the centre of the bottom by an amount sufficient to permit the cylindrical side wall to act as means for retaining the plug in the spout, when the filter unit is received in the well.

8. In combination, a filter unit and containment vessel for use in pressure filtration, the filter unit comprising:

a) an upper, open-ended reservoir for receiving liquid to be filtered;

b) a cap, for the open upper end of the reservoir, having an upstanding, centrally-located pressure connector;

c) a lower receptacle, for receiving filtrate, having at least one outwardly extending spout and a removable plug therein;

d) filter means intermediate the reservoir and receptacle; and

e) means for providing a fluid tight seal between the peripheries of the reservoir, filter means and receptacle,

and the containment vessel being arranged to receive therein the filter unit and including a closed bottom, a cylindrical side wall and an open top, the bottom having a well therein which extends below the plane of the bottom for accommodating the base of the receptacle of the filter unit with the distance from the plane of the bottom of the well to the open top of the vessel being less than the height of the filter unit, and a closure for the open top, which has a central opening to permit the passage of the pressure connector of the filter unit from the containment vessel.

9. A combination as claimed in claim 8, in which the cylindrical side wall of the vessel includes a lower portion which extends downwardly from the closed bottom below the well, with the lowermost edge of the side wall lower portion defining an annular support edge for the vessel.

10. A combination as claimed in claim 9, wherein a plurality of ribs extends radially from the well to the side wall lower portion.

11. A combination as claimed in any of claims 8 to 10, wherein the centre of the well is located off-centre with respect to the centre of the closed bottom, to provide a space between the well and the side wall which gradually varies from a minimum at one side of the well to a maximum at an opposite side of the well, with the spacing between the well and side wall being sufficient to permit orientation of the filter unit in the well, so as to locate the outlet of the spout adjacent the side wall, whereby the side wall functions as a means to retain the plug in the spout.

FIG. 1

FIG. 2